# EUROPEAN PATENT SPECIFICATION

(11) **EP 1 216 282 B1**
(45) Date of publication and mention of the grant of the patent: **01.09.2004**
(21) Application number: 00964425.3
(22) Date of filing: 29.09.2000
(51) Int. Cl.: C09K 5/04

(54) **CFC 12 REPLACEMENT REFRIGERANT**
ALTERNATIVE KUEHLMITTELZUSAMMENSETZUNG FÜR CFC 12
REFRIGERANT DE REMPLACEMENT DE CFC12

(30) Priority: 30.09.1999 GB 9923088; 02.03.2000 GB 0005043; 27.04.2000 GB 0010172
(43) Date of publication of application: 26.06.2002
(73) Proprietor: RPL Holdings Limited, Manchester M17 1PG (GB)
(72) Inventor: POWELL, Richard, Bunbury, Cheshire CW6 9NW (GB); POOL, John Edward, Altrincham, Cheshire WA15 9ST (GB); CAPPER, John Derek, Northwich, Cheshire CW9 8LY (GB); THOMAS, James Victor, Nova Scotia B2T 1H7 (CA)
(74) Representative: Browne, Robin Forsythe, Dr.
(86) International application number: PCT/GB2000/003719
(87) International publication number: WO 2001/023491

(56) References cited:
- EP-A- 0 779 352
- WO-A-96/03473
- DATABASE WPI Section Ch, Week 199436 Derwent Publications Ltd., London, GB; Class E16, AN 1994-291153 XP002154143 & JP 06 220430 A (SANYO ELECTRIC CO LTD), 9 August 1994 (1994-08-09)

## Description

This invention relates to a refrigerant particularly but not exclusively for air conditioning systems. The system relates especially to refrigerant compositions which have no adverse effect on the atmospheric ozone layer and to compositions which can be added to existing refrigerants which are compatible with lubricants commonly used in refrigeration and air conditioning systems. The invention also relates to a method of modifying refrigeration and air conditioning systems.

Chlorofluorocarbons (CFCs) eg CFC 11 and CFC 12 are stable, of low toxicity and non-flammable providing low hazard working conditions used in refrigeration and air conditioning systems. When released they permeate into the stratosphere and attack the ozone layer which protects the environment from damaging effects of ultraviolet rays. The Montreal Protocol, an International environmental agreement signed by over 160 countries, mandates the phase-out of CFCs according to an agreed timetable. This now includes hydrochlorofluorocarbons (HCFCs) which also have an adverse effect on the ozone layer.

Any replacement for CFC 12 must have no ability to deplete ozone. The compositions of the present invention do not include chlorine atoms and consequently they will have no deleterious effect on the ozone layer while providing a similar performance as a working fluid to CFC 12 in refrigeration apparatus.

Various terms have been used in patent literature to describe refrigerant mixtures. These may be defined as follows:
**Zeotrope:** A fluid mixture whose vapour and liquid compositions are different at a specified temperature.
**Temperature glide:** If a zeotropic liquid is distilled at constant pressure its boiling point will increase. The change in boiling point from the beginning of the distillation until the point when a liquid phase has just disappeared is called the temperature glide. A glide is also observed when the saturated vapour of a zeotrope is condensed at constant pressure.
**Azeotrope:** A fluid mixture of specified composition whose vapour and liquid compositions are the same at a specified temperature. Strictly speaking a fluid mixture which is an azeotrope under for example evaporator conditions, cannot also be an azeotrope under the condenser conditions. However the refrigeration literature may describe a mixture as azeotropic provided that it meets the above definition at some temperature within its working range.
**Near-azeotropes:** A blend which boils over a small temperature range, that has a small temperature glide.
**Retrofit refrigerant mixture:** A non-chlorine-containing mixture used to replace completely the original CFC or HCFC refrigerant.
**Extender refrigerant mixture**: A non-chlorine-containing mixture added during servicing to the CFC or HCFC refrigerant remaining in a unit, that is a top up refrigerant to make good any leakage.
**Hermetic compressor:** A compressor where the electric motor is in the same totally welded casing as the compressor. The motor is cooled by the refrigerant vapour returning to the compressor. The heat generated by the motor is removed through the condenser.
**Semi-hermetic compressor:** Similar to a hermetic compressor, the major difference being the casing has a bolted joint which can be opened to enable the motor and compressor to be serviced.
**Open compressor:** A compressor which is driven by an external motor via a drive shaft passing through the compressor casing. The motor heat is dissipated directly to the environment, not via the condenser. This results in a slightly more efficient performance than a hermetic compressor, but refrigerant leaks can occur at the shaft seal.

Percentages and proportions referred to in this specification are by weight unless indicated otherwise. Percentages and proportions are selected to total 100%

EP-A-0779352 discloses refrigerating fluids comprising R 134a, R 125 and butane.

According to the present invention a refrigerant composition consists of a hydrofluorocarbon component consisting of 1, 1, 1, 2-tetrafluoroethane (R 134a) and pentafluoroethane (R 125), wherein the weights of R 125 and R 134a are in the range:

| | |
|---|---|
| R 125 | 1-17% |
| R 134a | 99 - 83% |

and an additive selected from a saturated hydrocarbon or mixture thereof boiling in the range -5 to +70°C, wherein the hydrocarbon additive is selected from n-pentane, iso-pentane, cyclopentane and mixtures thereof.

The preferred weights of R 125 and R 134a are in the ranges

| | |
|---|---|
| R 125 | 2-15% |
| R 134a | 98 - 85% |

Positive displacement compressors, that is reciprocating or rotary compressors, used in refrigeration systems suck in small amounts of lubricant from the crank case which are ejected with the refrigerant vapour through the exhaust valves. In order to maintain compressor lubrication this oil must be forced around the circuit by the refrigerant stream and returned to the crank case. CFC and HCFC refrigerants are miscible with hydrocarbon oils and hence carry the oils around the circuit. However HFC refrigerants and hydrocarbon lubricants have low mutual solubilities so effective oil return may not occur. The problem is particularly acute in evaporators where low temperatures can increase the viscosities of oils sufficiently to prevent them being carried along the tube walls. With CFCs and HCFCs enough refrigerant remains in the oil to reduce the viscosities to enable oil return to occur.

When using HFCs with hydrocarbon lubricants oil return can be facilitated by introducing into the system a hydrocarbon fluid having the following properties.
(a) sufficient solubility in the lubricant at the evaporator temperature to reduce its viscosity; and
(b) sufficient volatility to allow distillation from the hot lubricant in the compressor crank case.

Hydrocarbons fulfil these requirements.

Preferred hydrocarbons additives selected from the group consisting of: 2-methylpropane, 2,2-dimethylpropane, butane, further comprise a hydrocarbon hexane, 2-methylpentane, 3-methylpentane, 2,2-dimethylbutane and methylcyclopentane. Use of n-pentane or isopentane or mixtures thereof is especially preferred.

In particularly preferred embodiments of the invention a mixture of pentane, preferably n-pentane, isopentane or a mixture thereof together with butane is employed. This provides the advantage that a close boiling or near azeotropic blend may be obtained so that formation of a flammable high proportion of pentane is avoided in the event of leakage, for example from a storage cylinder.

The amount of hydrocarbon additive may be up to 10%, preferably 1 to 8% and more preferably about 2 - 4%. The amount of R 125 may be increased with increasing amounts of the hydrocarbon additive.

Relative proportions of the pentane and butane components may be selected to give a total of 0.2 to 5% of the composition, preferably 2 to 4%, more preferably 3 to 4%. An amount of pentane, preferably isopentane of 0.2 to 2% may be used together with a corresponding amount of 4.8 to 3% of butane in a composition containing a total of 5% hydrocarbon. In compositions with less than 5% hydrocarbon, for example 1% or 4%, relatively larger ratios of butane : pentane may be employed to minimise hydrocarbon build-up on leakage. Flammability risks are therefore reduced.

A particularly preferred composition comprises:

| | |
|---|---|
| R 125 | 9.5% |
| R 134a | 88.5% |
| Pentane | 2% |

An alternative composition comprises:

| | |
|---|---|
| R125 | 5% |
| Butane/pentane mixture | 3 to 4% |
| R134a | balance to 100% |

A ratio of pentane/butane of 1 : 3 to 1 : 8, preferably about 1 : 5 may be employed.

Refrigerant compositions in accordance with this invention confer several advantages. The presence of R 125 suppresses the flammability of the refrigerant mixture. The higher HFC content enables more pentane to be added to the mixture thereby reducing the solubility properties of the mixture with traditional lubricants, for example mineral and alkyl benzene oils.

The present invention may confer a number of benefits in comparison to R 12 including lower intrinsic global warming potential and lower discharge temperature. The present invention may confer a number of benefits in comparison to pure R 134a including greater miscibility and higher capacity with hydrocarbon oils and hence better oil return.

The invention is further described by means of examples but not in any limitative sense.

### EXAMPLE 1

R125/R134a/pentane compositions were evaluated using standard refrigeration cycle analysis techniques to assess their suitabilities as retrofits for R12 in hermetic or semi-hermetic systems. The operating conditions selected for the analysis are typical of those conditions found in refrigeration systems. Since the blends were, strictly speaking, zeotropes the midpoints of their temperature glides in the evaporator and condenser were chosen to define the temperature limits of the cycle. The same temperatures were also used to generate performance data for R12.

The pentane was present at 4% by weight based on the total weight of the R125/R134a blend. To simplify the calculation this small amount of pentane was omitted.

Compositions containing 1 and 15% R125 were considered.

The following cycle conditions were used in the analysis:

### EVAPORATOR

| | |
|---|---|
| Midpoint fluid evaporation temperature | 7.0 °C |
| Superheating | 5.0°C |
| Suction line pressure drop (in saturated temperature) | 1.5 °C |

### CONDENSER

| | |
|---|---|
| Midpoint fluid condensing temperature | 45.0 °C |
| Subcooling | 5.0 °C |
| Exhaust line pressure drop (in saturated temperature) | 1.5 °C |

### LIQUID LINE/SUCTION LINE HEAT EXCHANGER

| | |
|---|---|
| Efficiency | 0.3 |

### COMPRESSOR

| | |
|---|---|
| Electric motor efficiency | 0.85 |
| Compressor isentropic efficiency | 0.7 |
| Compressor volumetric efficiency | 0.82 |

### PARASITIC POWER

| | |
|---|---|
| Indoor fan | 0.3 kW |
| Outdoor fan | 0.4 kW |
| Control | 0.1 kW |

The results of analysing the performance of an air-conditioning unit using these operating conditions are shown in Table 1 and key parameters plotted in Chart 1.

All blends have lower exhaust temperatures than R12 and therefore meet the requirements of this specification on this account.

The COPs (system) are not less than 97% of that of R12. The cooling capacities of all the compositions are greater than 90% of that of R12 over the whole of the dilution range.

Compositions containing 3% or more R125 have capacities greater than 95% of that of R12. Compositions containing 12 % or more of R125 have capacities greater than that of R12.

The discharge pressures do not exceed that of R12 by more than 2 bar for all compositions.

All compositions consisting of R134a, R125 and a saturated hydrocarbon selected from n-pentane, iso-pentane, cyclo-pentane and mixtures thereof meet the requirements of this invention. Compositions with 9 to 13 % R125 are especially promising, providing a good compromise between discharge pressure and capacity.

### EXAMPLE 2

R125/R134a/pentane compositions were evaluated using standard refrigeration cycle analysis techniques to assess their suitabilities as retrofits for R12 in mobile air conditioning systems. The operating conditions selected for the analysis are typical of those conditions found in MAC systems. Since the blends were, strictly speaking, zeotropes the midpoints of its temperature glides in the evaporator and condenser were chosen to define the temperature limits of the cycle. The same temperatures were also used to generate performance data for R12.

The pentane was present at 4% by weight based on the total weight of the R125/R134a blend. To simplify the calculation this small amount of pentane was omitted.

Compositions containing 1 and 17% R125 were considered.

The following cycle conditions were used in the analysis:

### EVAPORATOR

| | |
|---|---|
| Midpoint fluid evaporation temperature | 7.0 °C |
| Superheating | 5.0 °C |
| Suction line pressure drop (in saturated temperature) | 1.5 °C |

### CONDENSER

| | |
|---|---|
| Midpoint fluid condensing temperature | 60.0 °C |
| Subcooling | 5.0 °C |
| Exhaust line pressure drop (in saturated temperature) | 1.5 °C |

### COMPRESSOR

| | |
|---|---|
| Compressor isentropic efficiency | 0.7 |
| Compressor volumetric efficiency | 0.82 |
| PARASITIC POWER | |
| Condenser fan | 0.4 kW |

The results of analysing the performance of an air-conditioning unit using these operating conditions are shown in Table 2 and key parameters plotted in Chart 2.

All blends have lower exhaust temperatures than R12 and therefore meet the requirements of this specification on this account.

The cooling capacities of all the compositions are greater than of that of R12 over the whole of the range.

Compositions containing up to 3% of R125 have discharge pressures that do not exceed that of R12 by more than 2 bar.

For high capacities in equipment that can withstand higher pressures 5 to 17% R125 is preferred and especially preferred is 10 to 17%.

If maximum pressure is a concern then blends containing 0 to 3 % 125 are preferred which boost capacity but do not exceed the pressure of R12 by more than 2 bar. These blends are near-azeotropic.

### EXAMPLE 3 (Comparative)

R12 and several R-134a/pentane compositions were evaluated in a typical refrigeration system to assess (a) the minimum amount of pentane required in R-134a to provide proper oil return using mineral oil in the typical refrigeration system operating in medium or high temperature applications; and (b) if the resulting mixture provides coefficients of performance and pressures and temperatures similar to a system operating on R-12.

The refrigeration system used comprised a 0.37 kW type Danfoss model DA05H1AAN air-cooled hermetic compressor with a design evaporation temperature of -6°C to +10°C and a capacity of 967 W to 1861 W/hr. The unit was fitted with a tube in tube evaporator and an oil sight glass was fitted to the compressor. The system was charged with 3 G oil (150 viscosity) and was operated as a condensing system to condense R22 vapour from the top of a heated cylinder. The condensate flow was by gravity from the evaporator/condenser to a second unheated cylinder. The system capacity was determined by the weight of R22 condensed during a fixed time period. The flow of R22 vapour to the evaporator/condenser was restricted manually to provide various load conditions. All pressure, temperature capacity and amperage readings were taken hourly and averaged over a six to eight hour period. A connection on the discharge line and evaporator inlet facilitated vapour sampling and allowed addition of graduated amounts of pentane to the system.

The system was charged with 3 Gs oil (150 viscosity). The system was operated as a condensing system to condense R-22 vapours from the top of a heated cylinder and the condensate flowed by gravity from the evaporator/condenser to a second unheated cylinder. The system capacity was determined by the weight of R-22 condensed during a fixed time period. The flow of R-22 vapour to the evaporator/condenser was restricted manually to provide various load conditions.

In stage 1 of the trial, the system was initially operated with a charge of 1.2 kg of R-12. The following data was monitored and recorded - voltage, amperage, suction pressure, suction temperature, discharge pressure, discharge temperature, liquid line temperature, evaporator temperature, ambient temperature, oil level, source and receiving cylinder temperatures and process rates in kg/m. The data was measured hourly and averaged over an 18 hour period. During this time the evaporator temperatures were controlled by restricting the inlet of purge gas and were monitored over a range of temperatures between -34°C and -6°C.

In stage 2 of the trial, all R-12 was removed from the system leaving the oil in place. This was then replaced with R-134a at approximately 90% of original R-12 charge by weight. The oil level was again recorded. The refrigeration system was then operated for several days and the above data recorded at hourly intervals.

It was noted that after many days of operation at various load conditions the oil level in the compressor did not change.

15m of suction line was then added to the system, again with no change in oil level. Oil return was then inhibited and after several days of operation the oil level dropped by approx 10mm.

Pentane was added to the R-134a to a maximum of 2% of the original charge by weight. After approx 18 hours the oil level increased by approx 6mm.

Additional amounts of pentane were later added up to a maximum of 6% of original refrigerant charge with smaller increases in oil level observed with each addition of pentane.

Referring to Table 3 the following observations can be made in respect of stage 2 of the trial (as compared to stage 1).
(a) oil return was improved with the addition of pentane;
(b) capacities were slightly higher under all load conditions;
(c) energy consumption was slightly lower under all load conditions;
(d) discharge pressures were slightly higher on average;
(e) suction pressures were similar on average;
(f) discharge temperatures were slightly higher on average;
(g) suction temperatures were considerably higher on average; and
(h) there was no apparent negative impact on the system operation or components.

It was noted that the mixture became flammable in concentrations of 10% or more of pentane based on an open flame test and percentages as determined by gas chromatography area percentage.

Fractionation of the mixture was evident with percentages varying from 1% to 20% of pentane or a mixture of 6% by weight.

It was believed that the pentane may have been concentrated in the compressor crank case oil during the off cycle.

It may be concluded that a mixture ofR-134a plus 2% pentane installed as a drop in replacement provided oil return and equal or better capacity and higher efficiency for a medium or high temperature R-12 commercial system with no immediate negative effects on the equipment or operation. Blends with more than 2% pentane could fractionate to the point of flammability under certain conditions. Systems with large refrigerant oil charges and relatively small compressor crank case oil charges could be susceptible to compressor damage if pentane content in the oil reached concentrations that would affect the lubricity of the oil or cause foaming of the oil on start up after extended shut down periods.

### EXAMPLE 4

R-12 and several R134a/pentane mixtures were evaluated using an automotive air conditioning system to determine if the mixture best suited for commercial refrigeration systems as referred to in the previous example could also be used as a drop in replacement for R-12 in automotive air conditioning systems.

The air conditioning system was that of a 1990 Chrysler mini van having a 3.3 litre engine. The existing charge of R-12 in the air conditioning system was recovered and the system evacuated to 300 *µ*m pressure. This was then recharged with 0.82 kg of R-12 as recommended by the vehicle manufacturer. Finally, temperature sensors were installed on the suction line, discharge line, evaporator air outlet and condition space of the system.

In stage 1 of the trial suction pressure, discharge pressure, suction temperature, discharge temperature, evaporator leaving air temperature, condition space temperature, ambient temperature and engine rpm were measured for the system at idle conditions and again at 2000 rpm. All data was recorded with the vehicle stationary.

In stage 2 of the trial the R-12 trial was recovered and the system again evacuated to 300 µm pressure. The system was then charged with R-134a and a 2% pentane mixture at volume equal to 90% of the original recommended charge. The same data was recorded as for stage 1 of the trial.

Finally, in stage 3 of the trial the R-134a/pentane mixture was recovered and the system again evacuated to 300 µm pressure. The system was then charged with R-134a (88%)/R-125 (10%)/pentane (2%). The same data was again recorded.

With reference to Table 4 it was seen that in stage 2 (when compared to stage 1)
(a) discharge pressures were on average 8% higher at idle and 4% higher at 2000 rpm;
(b) discharge temperatures were on average 3% lower at idle and 12% lower at 2000 rpm;
(c) other temperature and pressure readings showed no significant change;
(d) there was no apparent loss of capacity in this system; and
(e) there was no apparent negative impact on the system operation or components.

With reference to Table 5 it was seen that in stage 3
(a) there was no significant change to the temperatures and pressures when the 10% R-125 was added to the blend; and
(b) there was no apparent negative impact on the system operation or components.

### EXAMPLE 5

R-12 and several R134a/pentane/R125 mixtures were evaluated using the air conditioning system of a 2 litre 1987 Toyota Camry.

As in Example 4, the existing charge of R-12 was evacuated from the air conditioning system and the pressure of this system reduced to 300 *µ*m. This was then recharged with 0.68 kg of R-12 as recommended by the vehicle manufacturer. The air conditioning system was fitted with temperature sensors on the suction line, discharge line, evaporator air outlet and conditioned space.

In stage 1 of the trial data including suction pressure, discharge pressure, suction temperature, discharge temperature, evaporator leaving air temperature, conditioned space temperature, ambient temperature and engine rpm were measured at idle conditions and again at 2000 rpm. All data was recorded with the vehicle stationary.

In stage 2 of the trial the R-12 was recovered from the system and again evacuated to 300 *µ*m air pressure. The systems was then charged with a mixture of R-134a (88%)/R-125 (10%)/pentane (2%) equal to 90% of the original charge. The same data as in stage 1 was then recorded.

With reference to Table 6 it was seen that in stage 2 (compared to stage 1)
(a) discharge pressures were on average 18% higher at idle conditions and 6% higher at 2000 rpm; and
(b) there was no apparent negative impact on the system operation or components.

It was concluded from Examples 4 and 5 that a mixture of R-134a plus 2% pentane installed as a drop in replacement for R-12 in automotive air conditioning systems appears to provide similar capacity and no immediate negative effect on the equipment or operation. The addition of 10% R-125 to the above mixture does not have any significant effect on the previous pressures and temperatures of the system.

### EXAMPLE 6

### R-12 and several R-134a/pentane/R-125 compositions were evaluated using domestic refrigerator and freezer systems.

In a first trial a domestic refrigeration system was used. The system's specifications are as follows -
Manufacturer: General Electric
Size: 198 cubic litres
Kw :. 1 kw
Type : single door, single evaporator with freezer compartment, non-frost-free
Age : approx 25 to 30 years
Refrigerant charge : 0.128 kg
Voltage: 115/1/60

Gauges were installed on the suction and discharge lines. Temperature sensors were attached to suction and discharge lines approx 15 cm from the compressor.

In a first stage the system was operated with the existing R-12 refrigerant charge. The following data were recorded - voltage, amperage, suction pressure, suction temperature, discharge pressure, discharge temperature, space temperature, ambient temperature and compressor run time.

In the second stage the R-12 charge was recovered and the system was evacuated to 300 *µ*m pressure. The system was then recharged with R-134a/pentane (98/2%) mixture with approx 90% by weight of the original charge. The system was again operated and the same data as before recorded.

Finally, in stage 3 the R-134a/pentane mixture was recovered and the system was recharged with R-134a/R-125/pentane (88/10/2%) mixture with the same amount by weight as stage 2. The system was again operated and the same data as above recorded.

The results of these three stages are recorded in Table 6.

In a second trial a domestic freezer was used. The specification of the system are as follows:
Manufacturer: Viking
Size : 482 cubic litres
Kw : .2 Kw
Type : Chest type, non-frost-free
Age : Approx 25 to 30 years
Refrigerant charge : 0.434 kg
Voltage : 115/1/60

Gauges were installed on the suction and discharge lines. Temperature sensors were installed on suction and discharge lines approx 15 cm from the compressor.

In a first stage the system was operated with the existing R-12 refrigerant charge and the following data recorded - voltage, amperage, suction pressure, suction temperature, discharge pressure, discharge temperature, space temperature, ambient temperature and compressor run time.

In a second stage the R-12 charge was recovered and the system evacuated to 300 µm pressure. The system was then recharged with R-134a/pentane (98/2%) mixture with approx 90% by weight of the original charge. The system was again operated and the same data as before recorded

Finally, in stage 3 the R-134a/pentane mixture was recovered and replaced with R-134a/R125/pentane (88/10/2%) mixture with the same amount by weight of stage 2. The system was again operated and the same data recorded.

The data from all three stages is reproduced as Table 7.

With reference to Table 7 it was seen there are no significant changes in operating pressures, temperatures or efficiencies on changing the mixture. There was no apparent negative impact on the system operation or components.

In conclusion, a mixture of R-134a plus 2% pentane installed as a drop in replacement for R-12 domestic refrigerators and freezers appears to provide a similar capacity and no immediate negative effects on the equipment or operation. The addition of 10% R-125 to the above mixture did not have any significant effect on the previous pressures and temperatures or operation of the systems.

### EXAMPLE 7

Field test trials were carried out on a commercial refrigeration system using a mixture of R134a/R125/isopentane/butane in the ratio of 95/5/1/2% by weight. The refrigerant mixture was charged into the system and the performance was compared to previous test data. The results are shown in Table 9. The discharge in other pressures and temperatures, capacity and energy usage was similar to those of a blend of R134a/R125/pentane in the ratio 88/10/2%. The oil level remained consistent during the entire test. It was noted that replacing pentane with an isopentane/butane mixture provided the same oil return properties and that reducing the R125 content from 10% to 5% was not detrimental to performance.

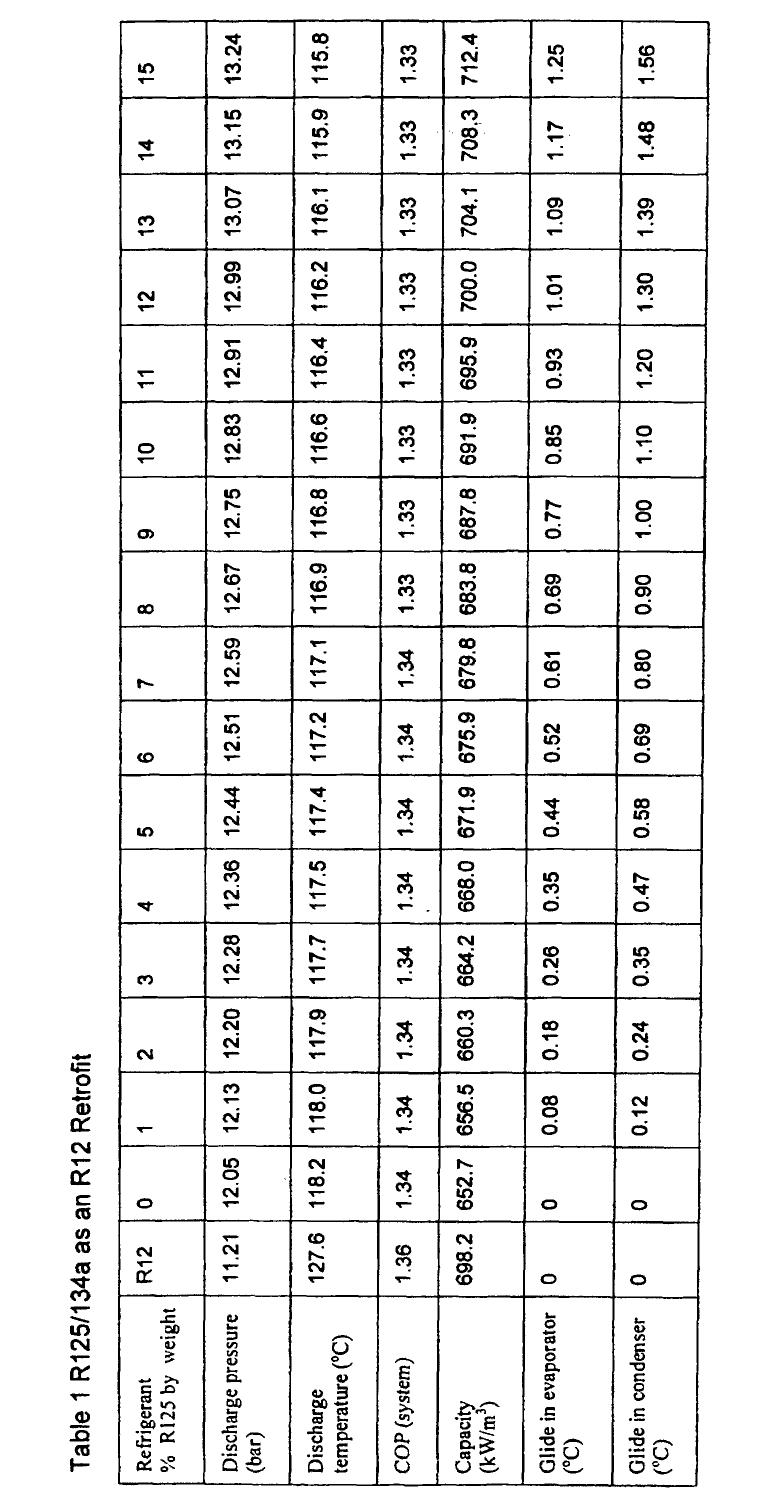

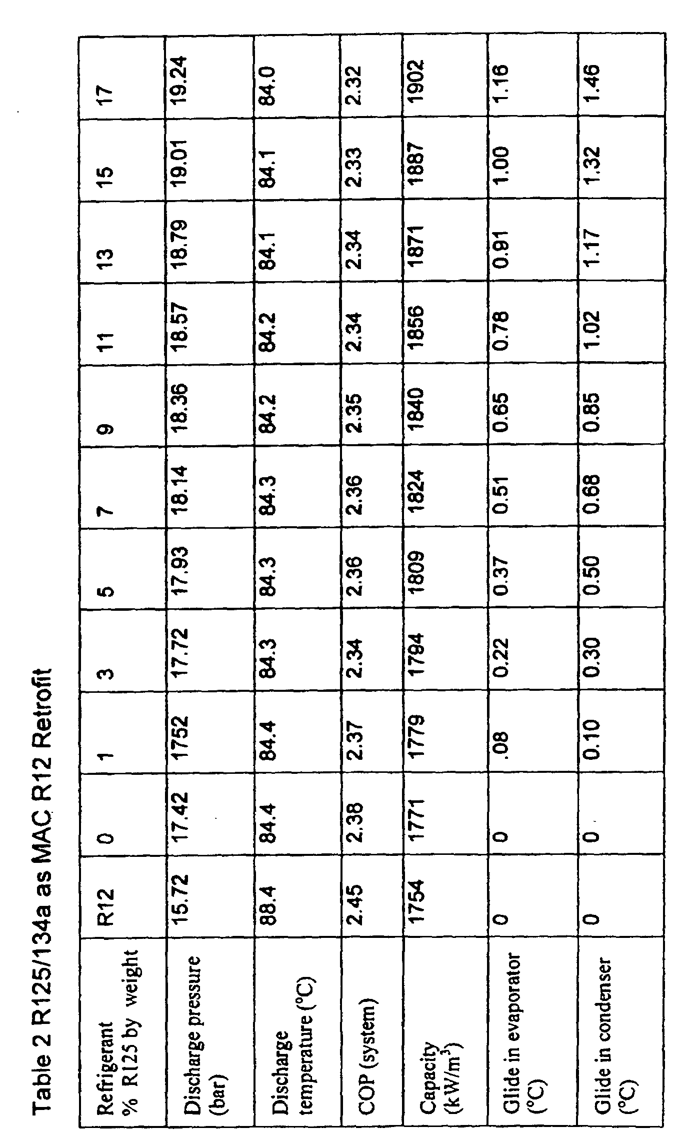

**Table 3 -**

| R-12 versus R-134a/Pentane Mixtures Commercial Refrigeration System | | | | |
|---|---|---|---|---|
| | R-12 | R-134a+2% | R-134a+4% | R-134a+6% |
| HIGH LOAD CONDITIONS | | | | |
| Suction Pressure | 1.72 | 1.59 | 1.79 | 1.59 |
| Suction Temp | 6 | 14 | 13 | 16 |
| Discharge Pressure | 8.4 | 8.7 | 8.4 | 9 |
| Discharge Temp | 59 | 59 | 60 | 63 |
| Capacity | 0.3 | 0.32 | 0.3 | 0.29 |
| Ambient Temp | 24 | 21 | 21 | 26 |
| Amperage | 9.96 | 9.58 | 10.5 | 10.8 |

| MEDIUM LOAD CONDITIONS | | | | |
|---|---|---|---|---|
| Suction Pressure | 0.69 | 0.83 | 0.69 | 0.83 |
| Suction Temp | 0 | 14 | 13 | 17 |
| Discharge Pressure | 7.5 | 7.8 | 7.5 | 7.8 |
| Discharge Temp | 56 | 57 | 58 | 59 |
| Capacity | 0.14 | 0.15 | 0.14 | 0.17 |
| Ambient Temp | 25 | 22 | 24 | 26 |
| Amperage | 9.14 | 8.78 | 9.8 | 10.04 |

| LOW LOAD CONDITIONS | | | | |
|---|---|---|---|---|
| Suction Pressure | -0.1 | 0 | 0.1 | 0 |
| Suction Temperature | .17 | 16 | 19 | 20 |
| Discharge Pressure | 5.8 | 6 | 7 | 6.4 |
| Discharge Temp | 42 | 46 | 47 | 49 |
| Capacity | 0.05 | 0.05 | 0.05 | 0.04 |
| Ambient Temp | 21 | 21 | 26 | 25 |
| Amperage | 8.7 | 8.14 | 9.43 | 9.25 |
| Pressures are in Bars Temperatures are in Celsius Capacity is in Kg/min | | | | |

**Table 4 -**

| R-12 versus R-134a+2% Pentane Automotive A/C Application Vehicle # 1 1990 Chrysler Mini-Van | | | | |
|---|---|---|---|---|
| | R-12 | | R-134a + 2% Pentane | |
| | 1000 rpm | 2000 rpm | 1000 rpm | 2000 rpm |
| Suction Press | 1.72 | 1.52 | 2.21 | 1.52 |
| Suction Temp | 17 | 14 | 21 | 12 |
| Discharge Press | 12.8 | 14.1 | 13.8 | 14.7 |
| Discharge Temp | 74 | 89 | 72 | 78 |
| Supply Air Temp | 4 | 3 | 5 | 3 |
| Space Temp | 18 | 16 | 18 | 16 |
| Ambient Temp | 27 | 27 | 25 | 25 |
| Pressures are in Bars Temperatures are in Celsius Vehicle Stationary | | | | |

**Table 5 -**

| R-134a + Pentane versus R-134a + R 125 + Pentane Automotive A/C Application Vehicle #1 1990 Chrysler Mini-Van | | | | |
|---|---|---|---|---|
| | R-134a + 2% Pentane | | R-134a + R-125 + Pentane | |
| | 1000 rpm | 2000 rpm | 1000 rpm | 2000 rpm |
| Suction Press | 1.38 | 1.38 | 1.53 | 1.5 |
| Suction Temp | 8 | 10 | 10 | 12 |
| Discharge Press | 13.62 | 13.03 | 13.62 | 13.62 |
| Discharge Temp | 71 | 80 | 69 | 74 |
| Supply Air Temp | 12 | 13 | 12 | 13 |
| Space Temp | 12 | 13 | 12 | 13 |
| Ambient Temp | 9 | 9 | 10 | 10 |
| Pressures are in Bars Temperatures are in Celsius Vehicle Stationary | | | | |

**Table 6 -**

| R-12 versus R-134a/R-125/Pentane (88/10/2%) Automotive A/C Application Vehicle #2 1987 Toyota Camry | | | | |
|---|---|---|---|---|
| | R-12 | | R-134a/R-125/Pentane | |
| | 1000 rpm | 2000 rpm | 1000 rpm | 2000 rpm |
| Suction Press | 1.33 | 1.24 | 1.38 | 1.19 |
| Suction Temp | -3 | -5 | 0 | -3 |
| Discharge Press | 8.39 | 11.03 | 9.88 | 11.72 |
| Discharge Temp | 47 | 69 | 49 | 78 |
| Supply Air Temp | 4 | 5 | 5 | 3 |
| Space Temp | 9 | 7 | 7 | 7 |
| Ambient Temp | 9 | 11 | 10 | 10 |
| Pressures are in Bars Temperatures are in Celsius Vehicle Stationary | | | | |

**Table 7 -**

| R-12 Replacement Test Results. Domestic Refrigerator | | | |
|---|---|---|---|
| | R-12 100% | R-134a/pentane 98/2% | R-134a/R-125/pentane 88/10/2% |
| Suction Press | 0.34 | 0.21 | 0.21 |
| Suction Temp | 22 | 20 | 17 |
| Discharge Press | 8.5 | 8.2 | 8.33 |
| Discharge Temp | 63 | 60 | 56 |
| Space Temp | 3 | 3 | 1 |
| Ambient Temp | 27 | 24 | 22 |
| Amperage | 1.49 | 1.47 | 1.37 |
| Voltage | 118 | 117 | 118 |
| Run Time/24 Hours | 12.34 | 10.64 | 12.98 |
| Pressures are in Bars Temperatures are in Celsius | | | |

**Table 8 -**

| R-12 Replacement Test Results Domestic Freezer | | | |
|---|---|---|---|
| | R-12 100% | R-134a/pentane 98/2% | R-134a/R-125/pentane 88/10/1 |
| Suction Press | 0.17 | 0 12 | 0.17 |
| Suction Temp | 17 | 16 | 12 |
| Discharge Press | 9.24 | 9.1 | 9.8 |
| Discharge Temp | 60 | 53 | 57 |
| Space Temp | -17 | -19 | -15 |
| Ambient Temp | 25 | 22 | 22 |
| Amperage | 3.72 | 3.37 | 3.74 |
| Voltage | 117 | 117 | 118 |
| Run Time/24 Hours | 13.92 | 12.93 | 13.27 |
| Pressures are in Bars Temperatures are in Celsius | | | |

**Table 9 -**

| R-12 vs. R-134a/pentane vs. R-134a/r-125/pentane and r-134a/r-125/iso-pentane/butane Commercial Refrigeration System | | | | |
|---|---|---|---|---|
| | R-12 | BLEND 1 R-134A/ PENTANE | BLEND 2 R-134A/R-125 PENTANE | BLEND 3 R- 134A/R- 125/ ISOPENTANE/ BUTANE |
| WT% COMPOSITION | 100 % | 98/2 % | 88/10/2% | 92/5/1/2 % |

| **HIGH LOAD COND.** | | | | |
|---|---|---|---|---|
| SUCTION PRESSURE | 1.72 | 1.59 | 1.55 | 1.72 |
| SUCTION TEMP. | 6 | 14 | 14 | 12.8 |
| DISCHARGE PRESSURE | 8.4 | 8.7 | 9.06 | 9.31 |
| DISCHARGE TEMP. | 59 | 59 | 60 | 61 |
| CAPACITY | 0.3 | 0.32 | 0.32 | 0.31 |
| AMBIENT TEMP. | 24 | 21 | 19 | 20 |
| AMPERAGE | 9.96 | 9.58 | 10.4 | 10.13 |

| **MEDIUM LOAD COND.** | | | | |
|---|---|---|---|---|
| SUCTION PRESSURE | .69 | .83 | .67 | 0.63 |
| SUCTION TEMP | 0 | 14 | 11 | 12 |
| DISCHARGE PRESSURE | 7.5 | 7.8 | 7 | 7.6 |
| DISCHARGE TEMP. | 56 | 57 | 58 | 57 |
| CAPACITY | 0.14 | 0.15 | 0.16 | 0.17 |
| AMBIENT TEMP. | 25 | 22 | 19 | 20 |
| AMPERAGE | 9.14 | 8.78 | 9.48 | 9.21 |

| **LOW LOAD COND.** | | | | |
|---|---|---|---|---|
| SUCTION PRESSURE | -0.1 | 0 | 0 | 0 |
| SUCTION TEMP. | -17 | 16 | 16 | 16 |
| DISCHARGE PRESSURE | 5.8 | 6 | 6.4 | 7.2 |
| DISCHARGE TEMP. | 42 | 46 | 47 | 49 |
| CAPACITY | 0.05 | 0.05 | 0.06 | 0.07 |
| AMBIENT TEMP | 21 | 21 | 20 | 22 |
| AMPERAGE | 8.7 | 8.14 | 9.05 | 9.03 |
| Pressures are in bars Temperatures are in celsius Capacity is in kg/min. | | | | |

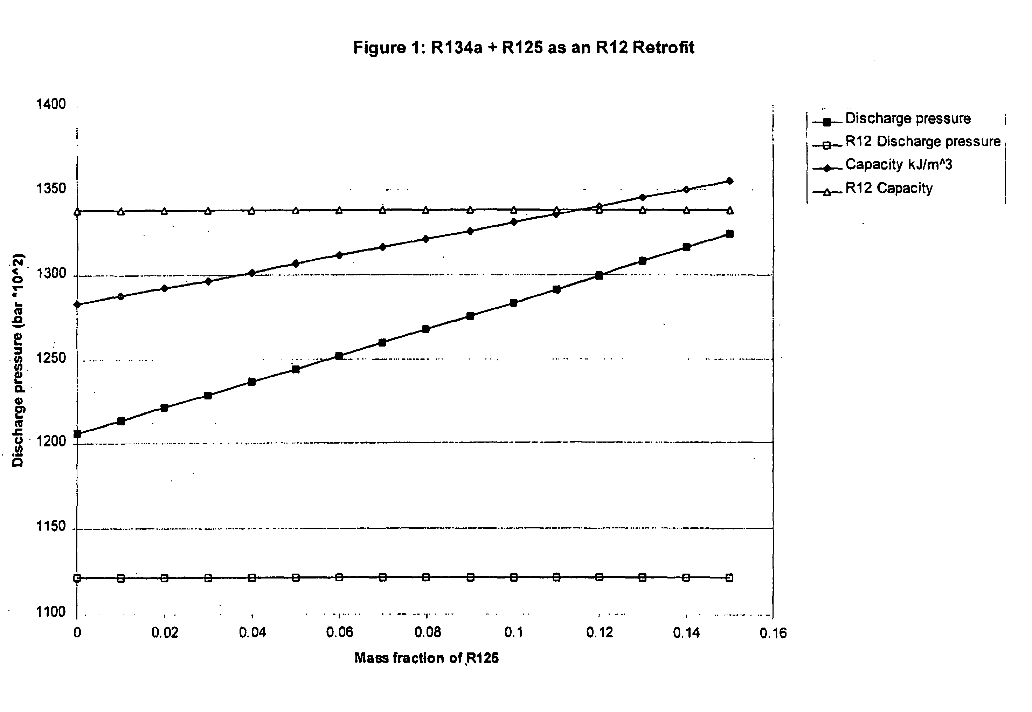

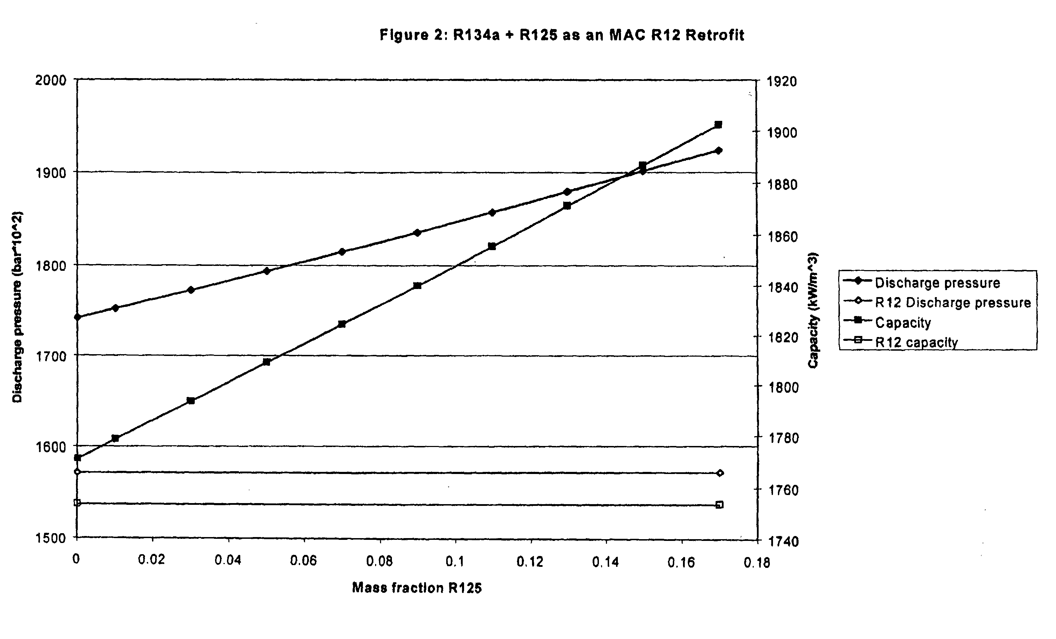

## Claims

1. A refrigerant composition consisting of a hydrofluorocarbon component consisting of 1, 1, 1, 2-tetrafluoroethane (R 134a) and pentafluoroethane (R 125), wherein the weights of R 125 and R 134a are in the range:
| | |
|---|---|
| R 125 | 1-17% |
| R134a | 99 - 83%; |
and an additive selected from a saturated hydrocarbon or mixture thereof boiling in the range -5 to +70°C, wherein the hydrocarbon additive is selected from n-pentane, iso-pentane, cyclopentane and mixtures thereof.

2. A refrigerant composition as claimed in claim 1, wherein the weights are in the ranges:
| | |
|---|---|
| R125 | 2-15% |
| R 134a | 98-85% |

3. A refrigerant composition as claimed in claim 2, wherein the weights are in the ranges:
| | |
|---|---|
| R 125 | 9 - 13% |
| R 134a | 91 - 87% |

4. A refrigerant composition as claimed in any preceding claim, wherein hydrocarbon additive is n-pentane.

5. A refrigerant composition as claimed in any preceding claim, wherein the hydrocarbon additive further comprises butane.

6. A refrigerant composition as claimed in claim 5, wherein the hydrocarbon is a mixture of n-pentane, isopentane and butane.

7. A refrigerant composition as claimed in claim 5 or 6, wherein the ratio of pentane: butane is 1 : 3 to 1 : 8.

8. A refrigerant composition as claimed in claim 7, wherein the ratio is 1 : 5.

9. A refrigerant composition as claimed in any preceding claim, wherein the hydrocarbon additive further comprises a hydrocarbon selected from the group consisting of: Z-methylpropane, 2,2-dimethylpropane, hexane, 2-methylpentane, 3-methylpentane, 2,2-dimethylbutane, methylcyclopentane and mixtures thereof.

10. A refrigerant composition as claimed in any preceding claim, wherein the amount of hydrocarbon additive is from a trace to 10%

11. A refrigerant composition as claimed in claim 10, wherein the amount of hydrocarbon additive is 1 to 8%

12. A refrigerant composition as claimed in claim 11, wherein the amount of hydrocarbon additive is 2 to 4%

## Patentansprüche

1. Kühlmittelzusammensetzung, bestehend aus einer Fluorkohlenwasserstoff-Komponente, die aus 1, 1, 1, 2-Tetrafluorethan (R134a) und Pentafluorethan (R125) besteht, wobei die Gewichte von R125 und R134a im Bereich:
| | |
|---|---|
| R125 | 1-17% |
| R134a | 99-83% |
liegen, und einem Additiv, das ausgewählt ist aus einem gesättigten Kohlenwasserstoff oder Mischungen desselben, die im Bereich von -5°C bis +70°C sieden, wobei das Kohlenwasserstoffadditiv ausgewählt ist aus n-Pentan, Iso-Pentan, Cyclopentan und Mischungen derselben.

2. Kühlmittelzusammensetzung gemäß Anspruch 1, wobei die Gewichte im Bereich:
| | |
|---|---|
| R125 | 2-15% |
| R134a | 98-85% |
liegen.

3. Kühlmittelzusammensetzung gemäß Anspruch 2, wobei die Gewichte im Bereich:
| | |
|---|---|
| R125 | 9-13% |
| R134a | 91-87% |
liegen.

4. Kühlmittelzusammensetzung gemäß einem der vorstehenden Ansprüche, wobei das Kohlenwasserstoffadditiv n-Pentan ist.

5. Kühlmittelzusammensetzung gemäß einem der vorstehenden Ansprüche, wobei das Kohlenwasserstoffadditiv weiterhin Butan umfasst.

6. Kühlmittelzusammensetzung gemäß Anspruch 5, wobei das Kohlenwasserstoffadditiv eine Mischung aus n-Pentan, Iso-Pentan und Butan ist.

7. Kühlmittelzusammensetzung gemäß Anspruch 5 oder 6, wobei das Verhältnis von Pentan : Butan 1 : 3 bis 1 : 8 beträgt.

8. Kühlmittelzusammensetzung gemäß Anspruch 7, wobei das Verhältnis 1 : 5 beträgt.

9. Kühlmittelzusammensetzung gemäß einem der vorstehenden Ansprüche, wobei das Kohlenwasserstoffadditiv weiterhin einen Kohlenwasserstoff umfasst, der ausgewählt ist aus der Gruppe, die umfasst: Z-Methylpropan, 2,2-Dimethylpropan, Hexan, 2-Methylpentan, 3-Methylpentan, 2,2-Dimethylbutan, Methylcyclopentan und Mischungen derselben.

10. Kühlmittelzusammensetzung gemäß einem der vorstehenden Ansprüche, wobei die Menge an Kohlenwasserstoffadditiv von Spuren bis zu 10% reicht.

11. Kühlmittelzusammensetzung gemäß Anspruch 10, wobei die Menge an Kohlenwasserstoffadditiv 1 bis 8 % beträgt.

12. Kühlmittelzusammensetzung gemäß Anspruch 11, wobei die Menge an Kohlenwasserstoffadditiv 2 bis 4 % beträgt.

## Revendications

1. Composition réfrigérante consistant en un composant hydrofluorocarbone consistant en du 1,1,1,2-tétrafluoroéthane (HFC 134a) et du pentafluoroéthane (HFC 125), dans laquelle les poids de HFC 125 et de HFC 134a sont dans la gamme de :
| | |
|---|---|
| HFC 125 | 1 - 17 % |
| HFC 134a | 99 - 83 % |
et un additif choisi parmi un hydrocarbone saturé ou un mélange de celui-ci bouillant dans la gamme allant de-5 à +70°C, dans laquelle l'additif hydrocarbone est choisi parmi du n-pentane, de l'isopentane, du cyclopentane et des mélanges de ceux-ci.

2. Composition réfrigérante selon la revendication 1, dans laquelle les poids sont dans les gammes de :
| | |
|---|---|
| HFC 125 | 2 - 15 % |
| HFC 134a | 98 - 85 % |

3. Composition réfrigérante selon la revendication 2, dans laquelle les poids sont dans les gammes de :
| | |
|---|---|
| HFC 125 | 9 - 13 % |
| HFC 134a | 91 - 87 % |

4. Composition réfrigérante selon l'une quelconque des revendications précédentes, dans laquelle l'additif hydrocarbone est du n-pentane.

5. Composition réfrigérante selon l'une quelconque des revendications précédentes, dans laquelle l'additif hydrocarbone comprend en outre du butane.

6. Composition réfrigérante selon la revendication 5, dans laquelle l'hydrocarbone est un mélange de n-pentane, d'isopentane et de butane.

7. Composition réfrigérante selon la revendication 5 ou 6, dans laquelle la proportion de pentane : butane varie de 1 : 3 à 1 : 8.

8. Composition réfrigérante selon la revendication 7, dans laquelle la proportion est de 1 : 5.

9. Composition réfrigérante selon l'une quelconque des revendications précédentes, dans laquelle l'additif hydrocarbone comprend en outre un hydrocarbone choisi dans le groupe consistant en : du 2-méthylpropane, du 2,2-diméthylpropane, de l'hexane, du 2-méthylpentane, du 3-méthylpentane, du 2,2-diméthylbutane, du méthylcyclopentane et des mélanges de ceux-ci.

10. Composition réfrigérante selon l'une quelconque des revendications précédentes, dans laquelle la quantité d'additif hydrocarbone varie de l'état de trace à 10 %.

11. Composition réfrigérante selon la revendication 10, dans laquelle la quantité d'additif d'hydrocarbone varie de 1 à 8 %.

12. Composition réfrigérante selon la revendication 11, dans laquelle la quantité d'additif hydrocarbone varie de 2 à 4 %.
